# DEMANDE DE BREVET EUROPEEN

(11) **EP 1 813 464 A2**
(43) Date de publication de la demande: **01.08.2007**
(21) Numéro de dépôt: 07300742.9
(22) Date de dépôt: 24.01.2007
(51) Int. Cl.: B60N 2/00

(54) **Procédé et dispositiif de détection de position d'occupant d'un siège de véhicule**

(30) Priorité: 30.01.2006 FR 0650311
(71) Demandeur: Peugeot Citroën Automobiles S.A., 78140 Vélizy Villacoublay (FR)
(72) Inventeur: Periot, Stéphanie Peugeot Citroën Automobiles SA, 75014 Paris (FR); Poinsignon, Jean Marc Peugeot Citroën Automobiles SA, 57220 Fouligny (FR); Hintzy, Julien Peugeot Citroën Automobiles SA, 25550 Presentevillers (FR)
(74) Mandataire: Vigand, Régis Louis Michel

(57) **Abrégé**

- Le procédé comporte les étapes suivantes :
- a) on mesure les efforts appliqués par l'occupant sur le siège en plusieurs emplacements de mesure (D, R, S, G) du siège (1),
- b) on corrèle les valeurs mesurées desdits efforts, et
- c) on compare les valeurs mesurées à des valeurs de référence, qui sont obtenues en mesurant les efforts appliqués auxdits emplacements de mesure (D, R, S, G) lorsque l'occupant est en position nominale sur le siège (1) du véhicule,
- d) et on effectue une calibration des mesures « siège vide », afin de contrôler les variations dues à des paramètres influents.

- Systèmes de sécurité des véhicules automobiles. Systèmes de réglage des prestations de confort des véhicules automobiles.

## Description

La présente invention concerne un procédé et un dispositif de détection de position d'occupant d'un siège de véhicule, en particulier de véhicule automobile. Le procédé et le dispositif de l'invention se rapportent au domaine de la sécurité passive, en particulier au domaine des dispositifs de détection et de classification de l'occupant d'un siège de véhicule automobile.

Parmi les positions ou postures de l'occupant d'un siège de véhicule, on distingue d'une part les positions dites nominales, auxquelles s'ajoutent les positions dérivées desdites positions nominales, qui correspondent aux positions de conduite usuelles, et d'autre part les positions dites non nominales désignées également positions « OOP » pour l'expression « Out Of Position ».

L'installation des systèmes de sécurité passive à l'intérieur des véhicules automobiles a été largement poussée par la mise en place dans les années 1980, en particulier aux Etats-Unis d'Amérique, de législations qui ont obligé les constructeurs à proposer des solutions de sécurité améliorées aux consommateurs.

Les airbags de la première génération sont aujourd'hui remplacés progressivement par des systèmes « intelligents » qui permettent de mieux répondre aux besoins en analysant les paramètres de l'accident et les caractéristiques physiques de l'occupant. La vitesse et la force de développement de l'airbag s'adaptent à l'occupant et aux conditions réelles de l'accident. Dans certains cas, le règlement américain FMVSS 208 (« Federal Motor Vehicle Safety Standard), qui est un règlement pour la protection des occupants de véhicules, exige la désactivation de l'airbag du siège passager. Plus précisément, certaines positions non nominales, demandées par ce règlement FMVSS 208, définissent une zone dans laquelle la désactivation de l'airbag peut être effective.

Ainsi, une caractérisation de la position de l'occupant se révèle nécessaire pour adapter les stratégies de protection en sécurité passive (airbag) ou encore les prestations de confort (confort postural, confort thermique, etc.)

Selon l'art antérieur, la Demanderesse utilise sur certains de ses véhicules des nappes de pression, en particulier des nappes de pression IEE (« International Electronics & Engineering »), intégrées à la garniture intérieure des sièges pour détecter la présence d'un passager. Le composant clé d'une telle nappe est un sandwich de films polyimides thermiquement stabilisés, sur lesquels sont imprimés des électrodes et des composants sensibles à la pression. Chacun des capteurs modifie sa résistance électrique en fonction de la pression qu'il subit. Ces données permettent ensuite à un système d'évaluation de calculer un profil de la pression en corrigeant automatiquement les effets du mouvement du véhicule et du changement de position de la personne assise sur le siège. Une telle solution implique toutefois des contraintes d'intégration importantes (structure, confort, design, etc.) et un surcoût sur le produit. De plus, par leur conception et par leur intégration, ces nappes de pression ne permettent pas de déterminer la position de l'occupant et, même dans certains cas d'utilisation, elles n'assument pas leur fonction de détection. C'est le cas, par exemple, d'un occupant qui est assis sur le bord avant seulement de l'assise du siège.

Il existe de nombreux systèmes d'airbag utilisant des capteurs, comme par exemple, le système divulgué par le brevet PCT n° WO 98/41424, dans lequel le siège passager du véhicule comporte un châssis et un réseau cordé fixé au châssis pour supporter le poids d'un occupant sur le siège. Le système comprend, de plus, un capteur couplé à une partie du réseau pour mesurer une contrainte de traction exercée sur le réseau par le poids de l'occupant sur le siège et pour envoyer un signal représentatif de cette contrainte. Il y a également un calculateur connecté à la sortie du capteur qui produit un signal de commande de déploiement de l'airbag lorsque la contrainte de traction atteint une valeur de seuil prédéterminée. Un tel système ne permet pas de déterminer la position de l'occupant.

La Demanderesse a également mis au point un procédé et un dispositif de détection et de classification d'occupant de siège de véhicule, qui n'utilise pas de capteur. Le siège présente au moins un réglage de déplacement commandé par au moins un actionneur, et le procédé comporte les étapes suivantes :
- a) on commande l'actionneur de déplacement du siège avec un profil croissant de puissance préalablement défini, la puissance présentant au moins une caractéristique représentative du couple appliqué sur l'arbre du moteur,
- b) on détecte le démarrage du mouvement de l'actionneur, et à cet instant on relève la valeur de la caractéristique variable de puissance,
- c) on compare la valeur de la caractéristique relevée à une série de valeurs de référence prédéterminées de la caractéristique, afin de déterminer la présence d'un occupant du siège et de le classifier selon son poids.

Ce procédé, qui utilise des informations provenant des actionneurs électriques de siège, ne permet pas non plus la détection de la position de l'occupant.

Pour la détection de position d'un occupant de véhicule, on connaît différents dispositifs de caractérisation qui utilisent des systèmes de visions. Mais de tels dispositifs entraînent des problèmes de coût, de design et d'intégration.

De tels systèmes connus de l'art antérieur impliquent des contraintes d'intégration importantes (confort, design, etc.) et un surcoût sur le véhicule. De plus, ces systèmes ne permettent pas de différencier divers types d'occupation et donc de classifier l'occupant selon diverses catégories.

Un premier but de la présente invention est de concevoir un procédé et un dispositif de détection de position d'occupant d'un siège de véhicule, en particulier de véhicule automobile.

Un second but de la présente invention est de concevoir un procédé et un dispositif de détection de position d'occupant d'un siège de véhicule, qui répondent aux normes réglementaires relatives à la détection, classification et caractérisation d'occupants, comme par exemple le règlement américain déjà cité FMVSS 208.

Un troisième but de la présente invention est de concevoir un procédé et un dispositif de détection de position d'occupant d'un siège de véhicule qui, contrairement aux procédés et dispositifs connus actuellement, n'entraînent pas de problèmes de coûts, de design et d'intégration.

Un autre but de la présente invention est de concevoir un procédé et un dispositif de détection de position d'occupant d'un siège de véhicule, qui permettent non seulement d'adapter les stratégies de protection en sécurité passive à l'intérieur d'un véhicule, mais aussi de régler les prestations de confort des occupants.

Un autre but de la présente invention est de concevoir un procédé et un dispositif de détection de position d'occupant d'un siège de véhicule, qui soient applicables sans modifications onéreuses sur des véhicules équipés de sièges à réglage électrique de positionnement.

Un autre but également de la présente invention est de concevoir un procédé de détection de position d'occupant avec des mesures fiables et peu coûteuses, sans endommager la qualité du confort du passager.

Pour atteindre ces buts, l'invention propose un nouveau procédé de détection de position d'occupant d'un siège de véhicule, qui comporte les étapes suivantes :
- a) on mesure les efforts appliqués par l'occupant sur le siège en plusieurs emplacements de mesure du siège,
- b) on corrèle les valeurs mesurées desdits efforts, et
- c) on compare les valeurs ainsi mesurées et corrélées à des valeurs de référence, qui sont obtenues en mesurant les efforts appliqués auxdits emplacements de mesure lorsque l'occupant est en position nominale sur le siège du véhicule.
- d) et on effectue une calibration des mesures « siège vide », afin de contrôler les variations dues à des paramètres influents, tels que l'usure du siège, la température, la tension d'alimentation, etc.

Selon un premier mode de réalisation de l'invention, on mesure les efforts appliqués par l'occupant sur le siège en plusieurs emplacements de mesure du siège à l'aide de capteurs d'effort placés auxdits emplacements de mesure.

Selon un mode de réalisation préféré de l'invention, le siège étant équipé de plusieurs réglages de déplacement commandés par actionneur électrique, on mesure les efforts appliqués par l'occupant sur le siège en plusieurs emplacements de mesure du siège en utilisant une information électrique provenant pour chacun des emplacements d'un actionneur électrique de réglage de siège, ladite information électrique étant représentative de l'effort fourni pour effectuer un déplacement imperceptible du siège à cet emplacement.

Ladite information électrique peut être la mesure du courant moyen consommé par l'actionneur de réglage correspondant, ou la mesure du pic de courant au démarrage dudit actionneur, ou encore cette information électrique peut être obtenue par l'analyse de la variance du courant dudit actionneur ou par l'analyse harmonique du courant dudit actionneur.

Ladite information peut être aussi la mesure de la période de rotation de l'actionneur de réglage correspondant, ou encore, de manière mise au point par la Demanderesse, la mesure de la puissance minimale permettant d'effectuer un micro déplacement du siège à l'emplacement donné.

Selon un mode de réalisation de l'invention donné à titre d'exemple, lesdits emplacements de mesure sont au nombre de quatre, à savoir :
- un emplacement de dossier, en partie avant et supérieure du dossier du siège,
- un emplacement de glissière, sur la face frontale de l'assise du siège,
- un emplacement de réhausse, sur la partie arrière de la face supérieure de l'assise du siège, et
- un emplacement de site, sur la partie avant de la face supérieure de l'assise du siège.

De préférence alors, lorsque le nombre d'emplacements auxquels on mesure les efforts appliqués par l'occupant sur le siège est de quatre, on utilise une information électrique provenant des actionneurs de réglage de dossier, de site, de réhausse et de glissière du siège.

En variante, le nombre d'emplacements auxquels on mesure les efforts appliqués par l'occupant sur le siège peut être supérieur à quatre, dans ce cas on utilise une information électrique qui peut provenir de tous les actionneurs de réglage du siège. Tous les mouvements commandés du siège sont susceptibles de fournir une information électrique utile pour déterminer la position de l'occupant sur le siège. Conformément au principe de la présente invention, il n'est pas souhaitable de limiter le concept aux quatre mouvements mentionnés ci-dessus.

Les valeurs de référence, mentionnées plus haut, sont obtenues en mesurant les efforts appliqués auxdits emplacements de mesure lors du bouclage de la ceinture de sécurité par l'occupant.

De préférence, on effectue, de plus, des mesures de calibration avec le siège à vide, de manière à contrôler les variations dues à différents paramètres variables pouvant avoir une influence sur les mesures, tels que l'usure du siège, la température, la tension d'alimentation, etc.

De préférence également, le procédé de l'invention est répété de manière périodique, de manière à déterminer la position instantanée de l'occupant.

La présente invention fournit également un nouveau dispositif de détection de position d'occupant d'un siège de véhicule, pour la mise en oeuvre du procédé de l'invention, lequel dispositif comporte des dispositifs de mesure de l'effort exercé par l'occupant sur le siège, situés en plusieurs emplacements de mesure sur le siège, des moyens pour transmettre lesdites mesures d'effort à une unité de calcul, laquelle unité de calcul effectue les corrélations des mesures et les comparaisons avec des valeurs de référence, et produit un signal de caractérisation de la position de l'occupant du siège qui peut être utilisé par les moyens de sécurité passive du véhicule et/ou les moyens de réglage des prestations de confort du véhicule.

Selon un mode de réalisation préféré du dispositif de l'invention, destiné à un siège présentant plusieurs réglages de déplacement commandé par actionneur électrique, le dispositif comprend :
- pour chaque réglage de déplacement, un moyen pour mesurer la valeur d'une caractéristique de puissance d'actionneur représentative de l'effort exercé par l'occupant sur le siège,
- des moyens pour transmettre lesdites mesures des valeurs mesurées à une unité de calcul, laquelle effectue les corrélations et les comparaisons desdites valeurs mesurées avec des valeurs de référence, et produit un signal de caractérisation de la position de l'occupant du siège qui peut être utilisé par les moyens de sécurité passive du véhicule et/ou les moyens de réglage des prestations de confort du véhicule.

De préférence, lesdits emplacements, désignés aussi « emplacements stratégiques » sont au nombre de quatre, à savoir :
- un emplacement de dossier, en partie avant et supérieure du dossier du siège,
- un emplacement de glissière, sur la face frontale de l'assise du siège,
- un emplacement de réhausse, sur la partie arrière de la face supérieure de l'assise du siège, et
- un emplacement de site, sur la partie avant de la face supérieure de l'assise du siège.

Selon le mode de réalisation préféré également, lesdits réglages de déplacement commandés par actionneur électrique sont les réglages de dossier, de site, de réhausse et de glissière du siège.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une représentation schématique d'un siège de véhicule, montrant les emplacements dits « stratégiques » de mesure d'effort appliqué sur le siège, afin d'illustrer le principe de l'invention,
- la figure 2 est une représentation schématique d'un siège de véhicule, illustrant les mouvements du siège utilisés dans la mesure des efforts appliqués sur le siège, afin d'illustrer également le principe de l'invention,
- la figure 3 est une représentation très schématique de la position nominale d'un occupant sur un siège,
- la figure 4 est un tableau présentant les variations perçues sur les mesures aux emplacements stratégiques du siège, selon différentes positions de l'occupant,
- la figure 5 représente schématiquement les trois positions d'occupant du siège testées dans un exemple chiffré de mise en oeuvre du procédé selon l'invention,
- la figure 6 représente schématiquement les points d'application sur le siège des trois positions d'occupant de la figure 5,
- la figure 7 représente les efforts mesurés sur la réhausse selon la position du point d'application de la figure 6, dans l'exemple de mise en oeuvre du procédé de l'invention illustré par les figures 5 et 6,
- la figure 8 représente les efforts mesurés sur le site selon la position du point d'application de la figure 6, dans l'exemple de mise en oeuvre du procédé de l'invention illustré par les figures 5 et 6, et
- la figure 9 est un tableau de synthèse des résultats de l'exemple de mise en oeuvre du procédé de l'invention illustré par les figures 5 à 8.

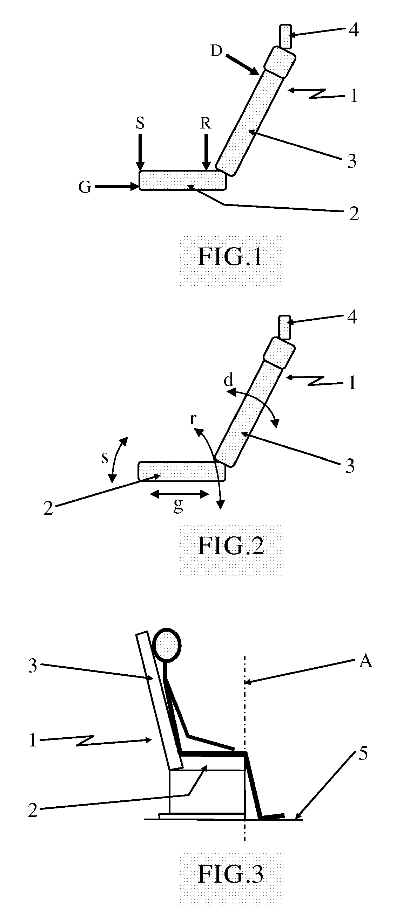

Sur le dessin de la figure 1, on a représenté, de manière très schématique, un siège 1, qui comprend une assise 2 et un dossier 3, complété par un appuie-tête 4. Les flèches D, R, S et G indiquent les emplacements auxquels sont mesurés les efforts appliqués sur le siège 1, ainsi que la direction selon laquelle ces efforts sont mesurés (représentée par la direction des vecteurs représentatifs des flèches). Dans le présent mode de réalisation de l'invention, donné à titre d'exemple non limitatif de l'objet de l'invention, on a sélectionné quatre emplacements dits « emplacements stratégiques » qui sont les suivants :
- D : emplacement Dossier
- R : emplacement Réhausse
- S : emplacement Site
- G : emplacement Glissière

De manière générale, le principe de l'invention consiste à relever les efforts appliqués aux emplacements stratégiques du siège, D, R, S et G, puis, en corrélant les efforts ainsi mesurés et en les comparant à une mesure de référence, à déterminer la position de l'occupant.

Pour ce faire, des capteurs d'effort sont placés aux emplacements stratégiques D, R, S et G.

En variante, on peut utiliser une information électrique 1 provenant des actionneurs de siège, représentative de l'effort fourni pour effectuer un déplacement imperceptible.

L'information électrique 1 peut être obtenue selon divers procédés. Elle peut résulter de l'analyse des paramètres électriques des actionneurs électriques de siège, ou de leur commande modulée.

Ainsi, lorsque l'information 1 est obtenue par l'analyse des paramètres électriques des actionneurs de siège, elle peut être la mesure du courant moyen consommé par l'actionneur, ou la mesure du pic de courant au démarrage de l'actionneur, ou résulter de l'analyse de la variance du courant ou encore résulter de l'analyse harmonique du spectre en courant de l'actionneur.

Lorsque l'information 1 résulte de la commande modulée des actionneurs électriques de siège, elle peut être obtenue par la mesure de la période de rotation de l'actionneur ou la détection de la puissance minimale permettant d'effectuer un micro déplacement de l'actionneur. Dans ce dernier procédé, on commande l'actionneur électrique de siège (moteur électrique) avec une rampe de puissance préalablement définie, la puissance présentant au moins une caractéristique variable (rapport cyclique d'une tension hachée), qui est représentative du couple appliqué sur l'arbre moteur dudit moteur, et on détecte le démarrage de la rotation de l'arbre moteur de l'actionneur électrique, et à cet instant on relève la valeur de ladite caractéristique variable du courant.

Pour mesurer les efforts perçus aux quatre emplacements stratégiques mentionnés précédemment à titre d'exemple, on utilise les quatre mouvements correspondants du siège, illustrés schématiquement par les flèches sur le dessin de la figure 2, à savoir :
- d : mouvement d'inclinaison du dossier,
- r : mouvement de réhausse du siège,
- s : mouvement de site du siège,
- g : mouvement de réglage avant arrière le long des glissières.

Bien que dans le présent mode de réalisation de l'invention, donné à titre d'exemple non limitatif de l'objet de l'invention, il y ait quatre mouvements électriques du siège qui fournissant chacun une information électrique utile à la détection de la position de l'occupant, on peut, tout en ne s'écartant pas du principe et de la portée de la présente invention, utiliser tous les mouvements électriques du siège sans limitation de leur nombre.

Comme déjà mentionné précédemment, il est nécessaire de définir une mesure de référence à la valeur de laquelle sont comparées les valeurs des mesures aux emplacements stratégiques. Cette mesure de référence correspond à la position nominale de l'occupant, représentée schématiquement sur le dessin de la figure 3, selon laquelle l'occupant est normalement assis sur l'assise 2, le dos sensiblement en contact avec la surface avant du dossier 3, les pieds sur le plancher 5 du véhicule et les jambes inclinées par rapport à la verticale de l'axe A, qui passe par l'extrémité avant de l'assise 2 du siège 1 et est sensiblement l'axe des genoux de l'occupant. Cette mesure de référence est réalisée lors du bouclage de la ceinture de sécurité. On effectue également des calibrations de mesure « siège vide », afin de contrôler les variations dues aux paramètres influents, tels que l'usure du siège, la température, la tension d'alimentation, etc.

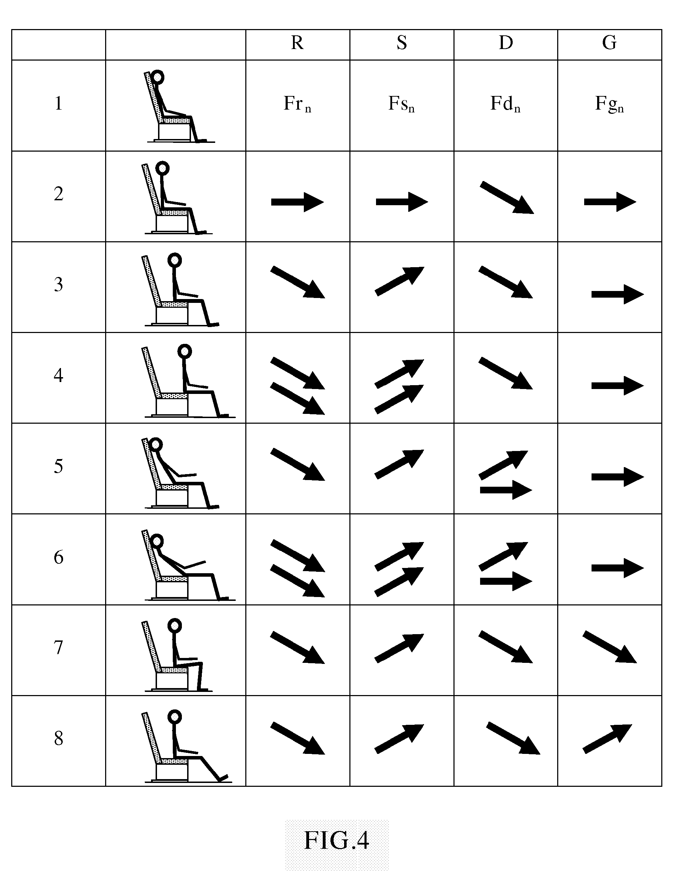

En effectuant des mesures de manière périodique et en les comparant avec les mesures de référence, il est possible de déterminer la position instantanée de l'occupant. Le tableau de la figure 4 présente les variations perçues sur les mesures de réhausse, de site, de dossier et de glissière selon huit positions ou postures de l'occupant, numérotées de 1 à 8 dans la première colonne du tableau. Pour toutes ces positions, le tableau de la figure 4 donne une représentation schématique (colonne 2) et les variations d'effort aux quatre emplacements stratégiques, à savoir aux « emplacements stratégiques » de réhausse (R), de site (S), de dossier (D) et de glissière (G).

La position 1 est la position nominale de référence, à laquelle correspondent les valeurs nominales des efforts Frn, Fsn, Fdₙ et Fgₙ, aux emplacements de réhausse R, de site S, de dossier D et de glissière G, respectivement.

La position 2 est une position dans laquelle l'occupant incline le buste vers l'avant ; en conséquence, l'effort sur D, c'est-à-dire sur le dossier, présente une variation fortement négative, le dos de l'occupant n'étant plus en contact avec le dossier 3 du siège 1. Les autres mesures, à savoir aux emplacements de réhausse R, de site S, et de glissière G, ne sont pas affectées.

Dans la position 3, l'occupant, non seulement incline le buste vers l'avant comme en position 2, mais déplace son corps en totalité vers l'avant pour reposer sur environ la moitié avant de l'assise 2 du siège 1; en conséquence, par rapport à la position 2 s'ajoutent deux autres variations : une variation négative sur R et une variation inverse, positive, sur S.

Dans la position 4, l'occupant poursuit le mouvement de la position 3 jusqu'à faire reposer son corps sur l'extrémité avant de l'assise 2 du siège 1 ; en conséquence, les variations sont de même sens que pour la position 3, mais plus fortes en valeur absolue sur R et S.

Dans la position 5, l'occupant déplace son corps en totalité vers l'avant pour reposer sur environ la moitié avant de l'assise 2 du siège 1 et, de plus, repose sa tête contre le dossier 3 ; en conséquence, les variations sont sensiblement celles de la position 3, à l'exception de l'effort en D qui est l'effort nominal ou un effort supérieur à celui-ci du fait que la tête de l'occupant « s'appuie » sur le dossier 3 du siège 1.

Dans la position 6, l'occupant poursuit le mouvement de la position 5 jusqu'à faire reposer son corps sur l'extrémité avant de l'assise 2 du siège 1, sa tête restant en appui contre le dossier 3 ; en conséquence, les variations sont de même sens que pour la position 5, mais plus fortes en valeur absolue sur R et S.

Dans la position 7, l'occupant, comme en position 3 incline le buste vers l'avant et déplace son corps en totalité vers l'avant pour reposer sur environ la moitié avant de l'assise 2 du siège 1, mais de plus ramène ses jambes droites, c'est-à-dire sensiblement selon l'axe A de la figure 3; en conséquence, par rapport à la position 3 s'ajoute une variation négative sur G.

La position 8 est celle de la position 7, à l'exception des jambes qui sont, non plus droites mais avancées ; en conséquence, par rapport à la position 7, il y a inversion du sens de la variation en G, qui devient positive par rapport à l'effort nominal Fgₙ.

Des mesures ont été réalisées par la Demanderesse afin d'illustrer avec des résultats chiffrés le principe de la présente invention. Elles ont été réalisées sur les moteurs de site et de réhausse en fonction du point d'application de la charge sur le siège.

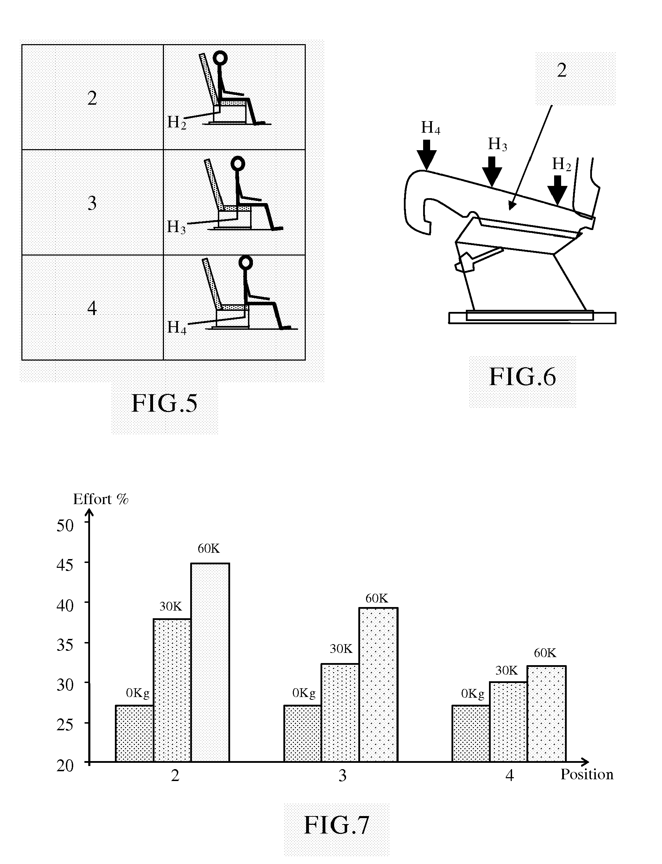

Le tableau de la figure 5 représente ces différents points d'application H₂, H₃ et H₄, qui correspondent aux trois positions numérotées 2, 3 et 4, respectivement, de la figure 4. Ces trois positions correspondent à trois points d'applications différents de l'occupant sur l'assise du siège, à savoir H₂ en position 2 (l'occupant repose sur toute l'assise), H₃ en position 3 (l'occupant repose sur la moitié avant de l'assise) et H₄ en position 4 (l'occupant repose sur l'extrémité avant de l'assise), les autres paramètres de la position restant inchangés. Les points d'application H₂, H₃ et H₄ des positions 2, 3 et 4, respectivement, sont représentés schématiquement sur une assise 2 de siège sur le dessin de la figure 6.

Pour chacune des positions référencées 2, 3 et 4 sur la figure 5, on a représenté les efforts mesurés sur la réhausse R à vide (0 kg), avec une charge de 30 kg et avec une charge de 60 kg. Les valeurs des efforts mesurés sur la réhausse sont indiquées sur le graphe de la figure 7 en pourcentage de l'effort appliqué.

Ainsi, par exemple, en position 2, c'est-à-dire en position selon laquelle l'occupant repose sur la totalité de l'assise (point d'application H₂), les efforts mesurés sur la réhausse à vide, avec une charge de 30 kg, et avec une charge de 60 kg, sont respectivement d'environ 30%, environ 38 % et environ 45 % des dites charges, respectivement. Les mêmes mesures sont réalisées pour les positions 2 et 3, et pour chacune de ces positions pour les mêmes charges aux points d'application H₃, H₄, respectivement.

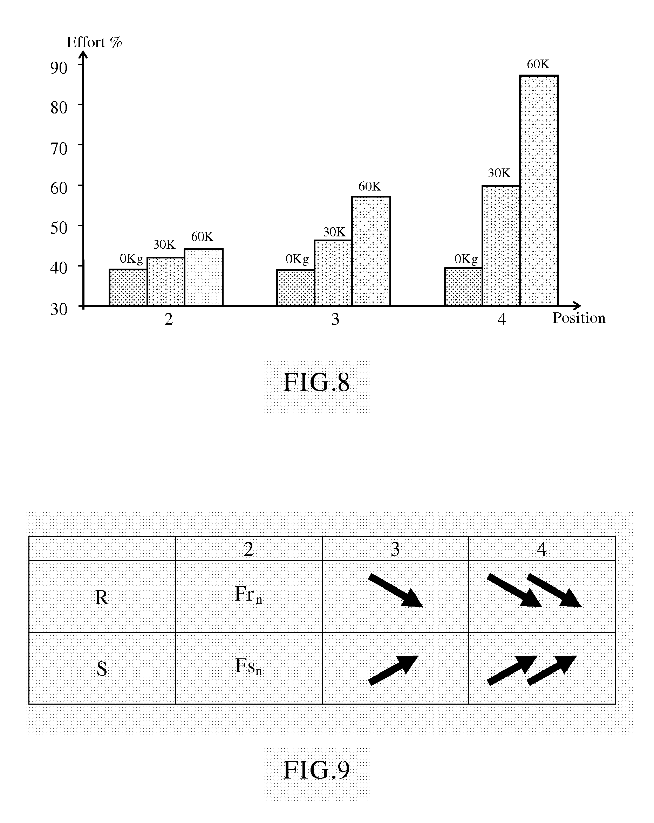

De la même façon, pour chacune des positions 2, 3 et 4, on a représenté sur la figure 8 les efforts mesurés sur le site S dans les mêmes conditions, c'est-à-dire à vide (0 kg), avec une charge de 30 kg et avec une charge de 60 kg. Les efforts mesurés sont également indiqués en pourcentage de l'effort appliqué.

La figure 9 est un tableau représentatif de la synthèse des mesures des figures 7 et 8. La colonne 2 rappelle les efforts appliqués, qui sont les efforts nominaux Frₙ et Fsₙ respectivement sur la réhausse R et sur le site S. Les colonnes 3 et 4 correspondent aux positions 3 et 4, de point d'application H₃ et H₄, respectivement. Les variations sur la réhausse et sur le site sont de même sens dans les deux positions 3 et 4, mais plus fortes en valeur absolue pour la position 4, qui correspond au point d'application H₄ en extrémité avant de l'assise 2 du siège 1.

Ainsi, la position du point d'application est représentative de l'effort perçu sur le moteur de réhausse et sur le moteur de site du siège. En comparant ainsi les mesures sur les quatre moteurs du siège, il est possible, selon les variations illustrées sur le tableau de la figure 4, de déterminer la position de l'occupant.

L'invention réalise aussi un dispositif de détection de position d'occupant d'un siège de véhicule pour la mise en oeuvre du procédé ainsi décrit.

Selon une premier mode de réalisation de ce dispositif, il comporte des capteurs de mesure de l'effort exercé par l'occupant sur le siège 1, lesquels capteurs sont situés en plusieurs emplacements de mesure sur le siège 1, par exemple les « emplacements stratégiques » mentionnés précédemment et référencés D, R, S et G sur le dessin de la figure 1. Le dispositif comprend également des moyens pour transmettre les mesures d'effort obtenues avec ces capteurs à une unité de calcul (non représentée), de type connu en soi, laquelle effectue les corrélations des mesures effectuées selon le procédé décrit ci-dessus et les comparaisons avec des valeurs de référence, et produit un signal de caractérisation de la position de l'occupant du siège qui peut être utilisé par les moyens de sécurité passive du véhicule et/ou les moyens de réglage des prestations de confort du véhicule.

Selon un mode de réalisation préféré, appliqué à un siège 1 qui présente plusieurs réglages de déplacement d, r, s, g commandé par actionneur électrique, tels qu'illustrés sur la figure 2, le dispositif comprend :
- pour chaque réglage de déplacement, d, r, s et g, un moyen pour mesurer la valeur d'une caractéristique de puissance d'actionneur électrique variable représentative de l'effort exercé par l'occupant sur le siège 1,
- des moyens pour transmettre lesdites valeurs mesurées à une unité de calcul, laquelle effectue les corrélations des mesures et les comparaisons avec des valeurs de référence, et produit un signal de caractérisation de la position de l'occupant du siège 1 qui peut être utilisé par les moyens de sécurité passive du véhicule et/ou les moyens de réglage des prestations de confort du véhicule.

Comme déjà mentionné en regard du procédé, la caractéristique de puissance d'actionneur électrique variable représentative de l'effort exercé par l'occupant sur le siège peut être la mesure du courant moyen consommé par ledit actionneur de réglage, ou la mesure du pic de courant au démarrage de l'actionneur de réglage, ou peut être obtenue par l'analyse de la variance ou l'analyse harmonique du courant de l'actionneur de réglage. Elle peut également être la mesure de la période de rotation de l'actionneur de réglage ou la mesure de la puissance minimale permettant d'effectuer un micro déplacement du siège à l'emplacement donné.

L'unité de calcul peut être avantageusement le calculateur embarqué sur le véhicule, programmé, de manière connue en soi, pour réaliser les corrélations et les comparaisons du procédé de l'invention, telles qu'elles sont exemplifiées dans la description ci-dessus.

Enfin, on notera que la présente invention répond aux normes réglementaires relatives à la détection, classification et caractérisation d'occupants (par exemple la norme américaine FMVSS 208 déjà mentionnée précédemment). La connaissance de la position de l'occupant sur le siège du véhicule permet d'adapter les différentes stratégies de mise en oeuvre des moyens de retenue et de sécurité (airbags, ceintures) en fonction des conditions d'utilisation, par exemple pour l'airbag frontal :
- Activation/ Inhibition
- Activation/ Déploiement faible risque,
- Activation/ Déploiement faible risque/ Inhibition.

De plus, l'information relative à la position de l'occupant, comme l'obtient la présente invention, permet d'adapter les réglages relatifs au confort postural, comme par exemple les réglages automatiques du siège et d'adaptation des fonctions de massage, les réglages relatifs au confort thermique, comme par exemple l'ajustement de la climatisation du conducteur et/ou des passagers , la ventilation des sièges, ou encore des réglages relatifs à d'autres fonctions ou dispositifs, tels les réglages d'inclinaison des feux ou les réglages de position des rétroviseurs, etc.

## Revendications

1. Procédé de détection de position d'occupant d'un siège de véhicule, **caractérisé en ce qu'**il comporte les étapes suivantes :
- a) on mesure les efforts appliqués par l'occupant sur le siège (1) en plusieurs emplacements de mesure (D, R, S, G) du siège,
- b) on corrèle les valeurs mesurées desdits efforts, et
- c) on compare les valeurs mesurées et corrélées à des valeurs de référence, qui sont obtenues en mesurant les efforts appliqués auxdits emplacements de mesure (D, R, S, G) lorsque l'occupant est en position nominale sur le siège (1) du véhicule,
- d) et on effectue une calibration des mesures « siège vide », afin de contrôler les variations dues à des paramètres influents.

2. Procédé selon la revendication 1, **caractérisé en ce qu'**on mesure les efforts appliqués par l'occupant sur le siège (1) en plusieurs emplacements de mesure (D, R, S, G) du siège (1) à l'aide de capteurs d'efforts placés auxdits emplacements de mesure (D, R, S, G).

3. Procédé selon la revendication 1, le siège (1) étant équipé de plusieurs réglages de déplacement (d, r, s, g) commandés par actionneur électrique, **caractérisé en ce qu'**on mesure les efforts appliqués par l'occupant sur le siège en plusieurs emplacements de mesure du siège (1) en utilisant une information électrique (I) provenant pour chacun des emplacements d'un actionneur électrique de réglage de siège, ladite information (I) étant représentative de l'effort fourni pour effectuer un déplacement imperceptible du siège à cet emplacement.

4. Procédé selon la revendication 3, **caractérisé en ce que** ladite information électrique (I) est la mesure du courant moyen consommé par ledit actionneur de réglage correspondant.

5. Procédé selon la revendication 3, **caractérisé en ce que** ladite information électrique (I) est la mesure du pic de courant au démarrage dudit actionneur de réglage correspondant.

6. Procédé selon la revendication 3, **caractérisé en ce que** ladite information électrique (I) est obtenue par l'analyse de la variance du courant dudit actionneur de réglage correspondant.

7. Procédé selon la revendication 3, **caractérisé en ce que** ladite information électrique (I) est obtenue par l'analyse harmonique du courant dudit actionneur de réglage correspondant.

8. Procédé selon la revendication 3, **caractérisé en ce que** ladite information électrique (I) est la mesure de la période de rotation dudit actionneur de réglage correspondant.

9. Procédé selon la revendication 3, **caractérisé en ce que** ladite information électrique (I) est la mesure de la puissance minimale permettant d'effectuer un déplacement du siège imperceptible par l'occupant à l'emplacement donné.

10. Procédé selon l'une quelconque des revendications 1 à 9, **caractérisé en ce que** lesdits emplacements sont au nombre de quatre, à savoir :
- un emplacement de dossier (D), en partie avant et supérieure du dossier (3) du siège (1),
- un emplacement de glissière (G), sur la face frontale de l'assise (2) du siège (1),
- un emplacement de réhausse (R), sur la partie arrière de la face supérieure de l'assise (2) du siège (1), et
- un emplacement de site (S), sur la partie avant de la face supérieure de l'assise (2) du siège (1).

11. Procédé selon la revendication 3, **caractérisé en ce que** le nombre d'emplacements auxquels on mesure les efforts appliqués par l'occupant sur le siège (1) est de quatre, et **en ce qu'**on utilise une information électrique (I) provenant des actionneurs électriques de réglage de dossier, de site, de réhausse et de glissière du siège.

12. Procédé selon la revendication 3, **caractérisé en ce que** le nombre d'emplacements auxquels on mesure les efforts appliqués par l'occupant sur le siège (1) est supérieur à quatre, et **en ce qu'**on utilise une information électrique (I) provenant de tous les actionneurs électriques de réglage du siège.

13. Procédé selon la revendication 1, **caractérisé en ce que** lesdites valeurs de référence sont obtenues en mesurant les efforts appliqués auxdits emplacements de mesure (D, R, S, G) lors du bouclage de la ceinture de sécurité par l'occupant.

14. Procédé selon la revendication 1, **caractérisé en ce qu'**on effectue, de plus, des mesures de calibration avec le siège (1) à vide, de manière à contrôler les variations dues à différents paramètres variables pouvant influencer les mesures.

15. Procédé selon l'une quelconque des revendications 1 à 14, **caractérisé en ce qu'**il est répété de manière périodique, de manière à déterminer la position instantanée de l'occupant.

16. Dispositif de détection de position d'occupant d'un siège de véhicule, pour la mise en oeuvre du procédé selon l'une quelconque des revendications 1 ou 2, **caractérisé en ce qu'**il comporte des capteurs de mesure de l'effort exercé par l'occupant sur le siège (1), situés en plusieurs emplacements de mesure (D, R, S, G) sur le siège (1), des moyens pour transmettre lesdites mesures d'effort à une unité de calcul, laquelle effectue les corrélations des mesures et les comparaisons avec des valeurs de référence, et produit un signal de caractérisation de la position de l'occupant du siège qui peut être utilisé par les moyens de sécurité passive du véhicule et/ou les moyens de réglage des prestations de confort du véhicule.

17. Dispositif de détection de position d'occupant d'un siège de véhicule, pour la mise en oeuvre du procédé selon l'une quelconque des revendications 1 ou 3 à 15, lequel siège (1) présente plusieurs réglages de déplacement (d, r, s, g) commandé par actionneur, **caractérisé en ce qu'**il comprend :
- pour chaque réglage de déplacement (d, r, s, g), un moyen pour mesurer la valeur d'une caractéristique de puissance d'actionneur représentative de l'effort exercé par l'occupant sur le siège (1),
- des moyens pour transmettre lesdites valeurs mesurées à une unité de calcul, laquelle effectue les corrélations des mesures et les comparaisons avec des valeurs de référence, et produit un signal de caractérisation de la position de l'occupant du siège qui peut être utilisé par les moyens de sécurité passive du véhicule et/ou les moyens de réglage des prestations de confort du véhicule.

18. Dispositif selon la revendication 17, **caractérisé en ce que** ladite caractéristique de puissance d'actionneur représentative de l'effort exercé par l'occupant sur le siège (1) est la mesure du courant moyen consommé par ledit actionneur de réglage correspondant.

19. Dispositif selon la revendication 17, **caractérisé en ce que** ladite caractéristique de puissance d'actionneur représentative de l'effort exercé par l'occupant sur le siège (1) est la mesure du pic de courant au démarrage dudit actionneur de réglage correspondant.

20. Dispositif selon la revendication 17, **caractérisé en ce que** ladite caractéristique de puissance d'actionneur représentative de l'effort exercé par l'occupant sur le siège (1) est obtenue par l'analyse de la variance du courant dudit actionneur de réglage correspondant.

21. Dispositif selon la revendication 17, **caractérisé en ce que** ladite caractéristique de puissance d'actionneur représentative de l'effort exercé par l'occupant sur le siège (1) est obtenue par l'analyse harmonique du courant dudit actionneur de réglage correspondant.

22. Dispositif selon la revendication 17, **caractérisé en ce que** ladite caractéristique de puissance d'actionneur représentative de l'effort exercé par l'occupant sur le siège (1) est la mesure de la période de rotation dudit actionneur de réglage correspondant.

23. Dispositif selon la revendication 17, **caractérisé en ce que** ladite caractéristique de puissance d'actionneur représentative de l'effort exercé par l'occupant sur le siège (1) est la mesure de la puissance minimale permettant d'effectuer un micro déplacement du siège à l'emplacement donné.

24. Dispositif selon la revendication 16, **caractérisé en ce que** lesdits emplacements sont au nombre de quatre, à savoir :
- un emplacement de dossier (D), en partie avant et supérieure du dossier (3) du siège (1),
- un emplacement de glissière (G), sur la face frontale de l'assise (2) du siège (1),
- un emplacement de réhausse (R), sur la partie arrière de la face supérieure de l'assise (2) du siège (1), et
- un emplacement de site (S), sur la partie avant de la face supérieure de l'assise (2) du siège (1).

25. Dispositif selon l'une quelconque des revendications 17 à 23, **caractérisé en ce que** lesdits réglages de déplacement (d, r, s, g) commandés par actionneur sont les réglages de dossier (d), de site (s), de réhausse (r) et de glissière (g) du siège (1).

26. Dispositif selon l'une quelconque des revendications 16 à 25, **caractérisé en ce que** ladite unité de calcul est le calculateur embarqué sur le véhicule.
